# EUROPÄISCHE PATENTSCHRIFT

(11) **EP 2 054 273 B1**
(45) Veröffentlichungstag und Bekanntmachung des Hinweises auf die Patenterteilung: **29.09.2010**
(21) Anmeldenummer: 07787270.3
(22) Anmeldetag: 09.07.2007
(51) Int. Cl.: B60R 21/01

(54) **VORRICHTUNG UND VERFAHREN ZUR ANSTEUERUNG VON PERSONENSCHUTZMITTEL**
DEVICE AND METHOD FOR THE ACTUATION OF PERSONAL PROTECTION MEANS
DISPOSITIF ET PROCÉDÉ DE COMMANDE DE MOYENS DE PROTECTION DE PERSONNES

(30) Priorität: 18.08.2006 DE 102006038844
(43) Veröffentlichungstag der Anmeldung: 06.05.2009
(73) Patentinhaber: Robert Bosch GmbH, 70442 Stuttgart (DE)
(72) Erfinder: WALTHER, Ralf, 26160 Bad Zwischenahn (DE); RAUH, Christian, 81377 München (DE)
(86) Internationale Anmeldenummer: PCT/EP2007/056994
(87) Internationale Veröffentlichungsnummer: WO 2008/019914

(56) Entgegenhaltungen:
- EP-A2- 0 305 654
- WO-A-2006/018333
- DE-A1- 19 855 452
- DE-A1-102005 020 146

## Beschreibung

### Stand der Technik

Die Erfindung betrifft eine Vorrichtung und ein Verfahren zur Ansteuerung von Personenschutzmitteln nach der Gattung der unabhängigen Patentansprilche.

Aus M. Feser, C. Wieand, C. Schmidt und T. Brandmeier: Crash Impact Sound Sensing (CISS)- Higher Crash Discrimination Performance at Lower Cost, Airbag 2004 ist es bekannt, Personenschutzmittel in Abhängigkeit von einem beschleunigungsbasierten Algorithmus und einem Körperschallsignal anzusteuern. Damit soll ein Frontalcrash besser detektiert werden und die Ansteuerungsentscheidung für kritische Situationen robuster werden. Außerdem soll die Einführung der Körperschallsensorik das System insgesamt verbilligen.

Aus DE 10 2005 020 146 A1 ist es bekannt, eine Sensorik zu verwenden, die einen Aufprallsensor und einen Körperschallsensor umfasst. Bei dem Aufpralisensor kann es sich um einen solchen Sensor zur Detektion einer durch den Aufprall des Objekts auf das Objekt bewirkten Deformation und/oder Kraft handeln. Auch eine Beschleunigung oder eine Beschleunigungsänderung kann damit erfasst werden. Mit dem hochfrequenzschwingenden Körperschallsignal soll eine Objektidentifizierung durchgeführt werden, so dass nur in dem Fall, in dem es sich bei dem Kollisionsobjekt um einen Fußgänger handelt eine Auslösesignal an einen Fußgängerschutzsystem gesendet wird. Je nach Schwere der Kollision, welche sich einerseits aus den Signalen des Aufprallsensors in besonderer Weise aus den Signalen des Körperschallsensors ermitteln lässt, kann die gezielte Auslösung eines Insassenschutzsystem erfolgen oder unterbleiben.

### Offenbarung der Erfindung

Die erfindungsgemäße Vorrichtung zur Ansteuerung von Personenschutzmitteln bzw. das erfindungsgemäße Verfahren zur Ansteuerung von Personenschutzmitteln mit den Merkmalen der unabhängigen Patentansprüche haben demgegenüber den Vorteil, dass ein zeitunabhängiger Algorithmus für die Beschleunigungssignale verwendet wird, der eine besondere Güte bezüglich Unfallerkennung, Unfallschwerebestimmung und Genauigkeit aufweist. Dies liegt daran, dass ein Vektor verwendet wird, der als Komponenten Merkmale aufweist, die von dem Beschleunigungssignal abgeleitet werden, aber nicht die Zeit.

Insbesondere ermöglicht die erfindungsgemäße Vorrichtung bzw. das erfindungsgemäße Verfahren eine gute Kompatibilität mit einem derzeitigen Algorithmus, einen hohen Grad an Modularität, denn der Einfluss des Körperschallsignals durch eine Schwellwertveränderung kann verwendet werden oder nicht. D.h. eine Umstellung von einem körperschall-berilcksichtigenden System auf ein nicht-körperschallberücksichtigendes Systen ist mit sehr geringem Aufwand möglich.

Auch die Robustheit wird erfindungsgemäß verbessert, denn die Hauptentscheidung beruht auf den altbewährten Niederfrequenzsignalen der Beschleunigungssignale, da dieses Niederfrequenzsignal einen kausalen Bezug zwischen Signal und Verletzungsschwere des Insassen angibt.

Kern des Vorschlags ist demnach, die Kennlinie im beschleunigungsbasierten Algorithmus in Abhängigkeit vom Körperschallsignal zu verändern. Dabei wird ein Vektor aus Merkmalen aus dem Beschleunigungssignal mit der Kennlinie verglichen, um die Ansteuerungsentscheidung herbeizuführen, D.h. es wird ein Feld mit mindestens zwei Merkmalen, die aus dem niederfrequenten Beschleunigungssignal abgeleitet werden, aufgespannt. Im Feld wird durch die Kennlinie wengistens ein Abschnitt definiert, der einen Ansteuerungsfall ist, d.h. wenn sich das Wertepaar in diesem Abschnitt befindet.

Es ist erfindungsgemäß, dass das Merkmal aus dem Körperschallsignal durch eine Bandpassfilterung und eine anschließende Einhüllendenbildung erzeugt wird. Die Einhüllendenbildung kann dabei durch eine Betragsbildung und eine Tiefpassfilterung erreicht werden.

Durch die in den abhängigen Ansprüchen aufgeführten Maßnahmen und Weiterbildungen sind vorteilhafte Verbesserungen der in den unabhängigen Patentansprüchen angegebenen Vorrichtung zur Ansteuerung von Personenschutzmitteln bzw. des in den unabhängigen Patentansprüchen angegebenen Verfahrens zur Ansteuerung von Personenschutzmitteln möglich.

Vorteilhaft ist die Verwendung eines Integrators zur Bildung des einfachen oder zweifachen Integrals des Beschleunigungssignals zur Bildung der zwei Merkmale, da dies gut auszuwertende Größen sind, für die ein großes Erfahrungswissen vorliegt.

Der Integrator, die Filter und die Betragsbildung können jeweils als Softwaremodule auf der Auswerteschaltung oder als Hardware realisiert sein. Hardwarekomponenten sind schneller als Softwaremodule, aber dafür unflexibler in der Anpassung.

Besonders vorteilhaft ist, dass die Beschleunigungssensorik und die Körperschallsensorik in einer gemeinsamen Sensorik verkörpert sind, wobei die Trennung der Signale dann durch einen Filter erreicht wird, da die Beschleunigungssignale die niederfrequenten Signale sind und die Körperschallsignale die hochfrequenten Signale. Alternativ ist es möglich, unterschiedliche Sensoren einzusetzen. Diese Sensoren können dann entsprechend ihres Anwendungsgebietes im Steuergerät oder im Fahrzeug platziert werden. Vorteilhaft ist, diese getrennten Sensoren in einer baulichen Einheit einzubauen, wobei die bauliche Einheit das Steuergerätgehäuse ist und die Sensoren auf einer gemeinsamen Lciterplatte angeordnet sind.

Es ist weiterhin von Vorteil, das Körperschallsignal derart vorzuverarbeiten, dass das Sensorausgangssignal mit einer reduzierten Abtastrate ausgegeben werden kann. Diese Vorverarbeitung kann beispielsweise eine vorteilhafte Bandpassfilterung und eine geeignete Einhüllendenbildung sein. Damit wird dann ein Signal erzeugt, mit dem letztlich die Kennlinie zur Trennung der Ansteuerungs- und Nichtansteuerungsfällen im Raum der vom niederfrequenten Signalanteil abgeleiteten Merkmalen verändert wird.

Wird in dieser Schrift von Integration besprochen, dann bedeutet dies eine mit dem Rechner mögliche Integration, also eine Aufsummierung oder auch eine Mittelwertbildung, wenn sie hier durch die Zeit geteilt werden soll.

Eine geeignete Realisierung der oben genannten Bestimmung der Einhüllenden kann in vorteilhafterweise durch die Nacheinanderausführung der Betragsbildung mit anschließender Tiefpassbildung dargestellt werden.

Es ist weiterhin von Vorteil, dass die Auswerteschaltung zusätzlich anhand des Wertepaares aus dem Beschleunigungssignal und dem einmal oder zweimal integrierten Beschleunigungssignal durch Vergleich mit einer weiteren Kennlinie bestimmt, ob überhaupt ein Auslösefall vorliegt oder ein sogenannter Misuse-Fall, also eine Kollision, die aber nicht zur Auslösung von Personenschutzmitteln führen soll.

Ferner kann in geeigneter Weise eine zusätzliche Berücksichtigung des hochfrequenten Signalanteils zu einer verbesserten Misuse-Robustheit führen.

Vorteilhafter Weise ist es möglich, anhand des Beschleunigungssignal eine Bewegung eines Fahrzeugs Insassen zu bestimmen, wobei die Auswerteschaltung, also beispielsweise ein Mikrocontroller in Abhängigkeit von der Bewegung die Auslösezeit für die Personenschutzmittel bestimmt. Diese Vorhersage der Bewegung des Fahrzeuginsassen kann insbesondere über eine Taylorreihenentwicklung ermittelt werden. Diese Taylorreihenentwicklung kann bereits nach dem dritten Glied abgebrochen werden. Die Taylorreihenentwicklung ist dabei auf den Weg normiert, so dass die Geschwindigkeit, also die erste integrale Beschleunigung mit der Zeit multipliziert wird und die Beschleunigung mit dem Quadrat der Zeit.

Ausführungsbeispiele der Erfindung sind in der Zeichnung dargestellt und werden in der nachfolgenden Beschreibung näher erläutert. Es zeigen Figur 1 ein Blockschaltbild der erfindungsgemäßen Vorrichtung, Figur 2 ein Flussdiagramm, Figur 3 ein Signalablaufdiagramm, Figur 4 ein Beschleunigungsvorverlagerungsdiagramm und Figur 5 ein weiteres Beschleunigungsvorverlagerungsdiagramm.

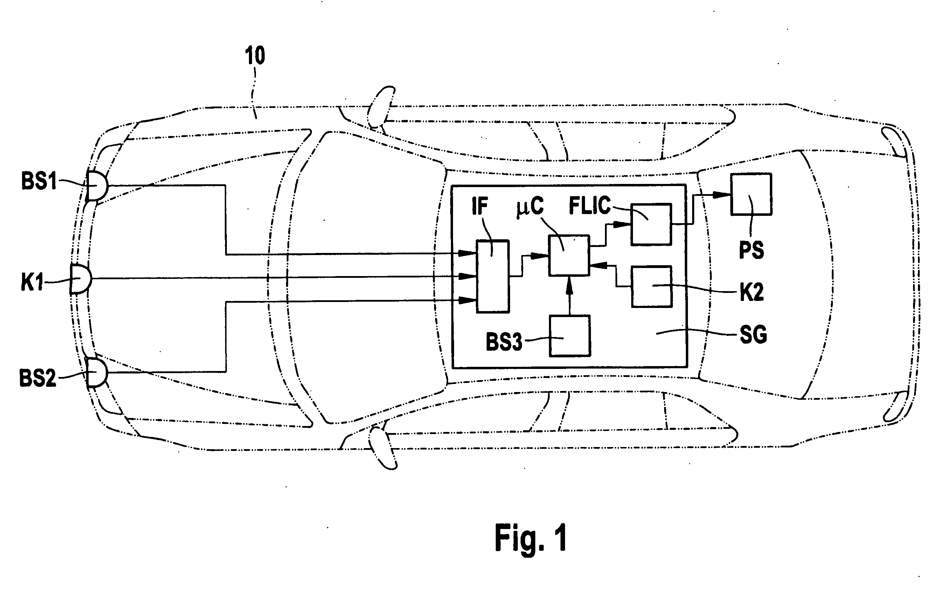

Figur 1 zeigt in einem Blockschaltbild die erfindungsgemäße Vorrichtung in einem Fahrzeug. Das Fahrzeug 10 weist an seiner Vorderseite zwei Beschleunigungssensoren BS1 und BS2 auf, die hinter der Stoßfängerverkleidung in geeigneter Weise angeordnet sind. Diese Beschleunigungssensoren BS1 und BS2 weisen ein mikromechanisches Element auf, das beispielsweise unter dem Einfluss einer Beschleunigung seine Kapazität ändert, wobei diese Kapazitätsänderung dann verstärkt und digitalisiert wird. Das so entstandene Datum wird dann an ein Steuergerät SG im Fahrzeug 10 übertragen, und zwar an dessen Schnittstellenbaustein IF. Anstatt von zwei Beschleunigungssensoren BS1 und BS2 können auch mehr als diese zwei Beschleunigungssensoren, beispielsweise 3 oder 4 oder auch nur ein einziger Beschleunigungssensor in der Fahrzeugfront verbaut sein. Es ist auch möglich, auf die Beschleunigungssensoren in der Front völlig zu verzichten. Zusätzlich ist hier noch in der Fahrzeugfront ein Körperschallsensor K1 eingebaut, bei dem es sich auch um einen Beschleunigungssensor handeln kann. Köperschallsignale werden vom Körperschallsensor K1 an den Schnittstellenbaustein IF des Steuergeräts SG übertragen. Auch hier ist es möglich mehr als ein Körperschallsensor zu verwenden, oder auch auf den Körperschallsensor K1 völlig zu verzichten.

Die Übertragung der Sensoren zum Steuergerät SG ist üblicherweise eine Powerline-Datenübertragung, wobei hier Einzelleitungen für jeden Sensor vorliegen. Es ist jedoch möglich, dass die Sensoren an einen Bus oder an einen Quasibus angeordnet sind. Vom Interface-Baustein, von dem es auch mehr als einen geben kann, werden die Sensordaten beispielsweise über den SPI-Bus zur Auswerteschaltung, d. h. zum Mikrocontroller µC übertragen. Anstatt eines Mikrocontrollers können auch ASICs oder auch Mikroprozessoren verwendet werden. Der Mikrocontroller µC erhält auch von Sensoren innerhalb des Steuergeräts SG Daten, und zwar von dem Beschleunigungssensor BS 3, der beispielsweise in Fahrzeuglängsrichtung empfindlich ist und vom Körperschallsensor K2. In Abhängigkeit von all diesen Daten errechnet der Mikrocontroller µC den Ansteuerungsalgorithmus, wie er im Folgenden beschrieben wird und steuert in Abhängigkeit davon die Zündkreisschaltung FLIC an. Der Mikrocontroller µC weist wenigstens einen Integrator, Bandpassfilter, Tiefpassfilter und eine Betragsbildung als Softwaremodule für die erfindungsgemäße Methode zur Verarbeitung der Sensorsignale auf. Weiterhin ist ein Modul zur Bildung des Vektors vorgesehen.

Wird diese Zündkreisansteuerung FLIC angesteuert, dann überträgt die Zündkreisansteuerung einen Zündstrom an die Personenschutzmittel wie Airbags oder Gurtstraffer. Dafür ist die Zündkreisansteuerung FLIG mit den Personenschutzmitteln PS, die im Fahrzeug verteilt sind, verbunden. Die Personenschutzmittel PS können auch Fußgängerschutzmittel, wie eine anhebbare Fronthaube bzw. Außenairbags umfassen. Durch die Verwendung der Körperschallsensoriken K1 und K2, die mit den entsprechenden Beschleunigungssensoren vereinigt werden können, so dass dann über einen Filter das Körperschallsignal vom Beschleunigungssignal, das niederfrequent ist, getrennt werden kann.

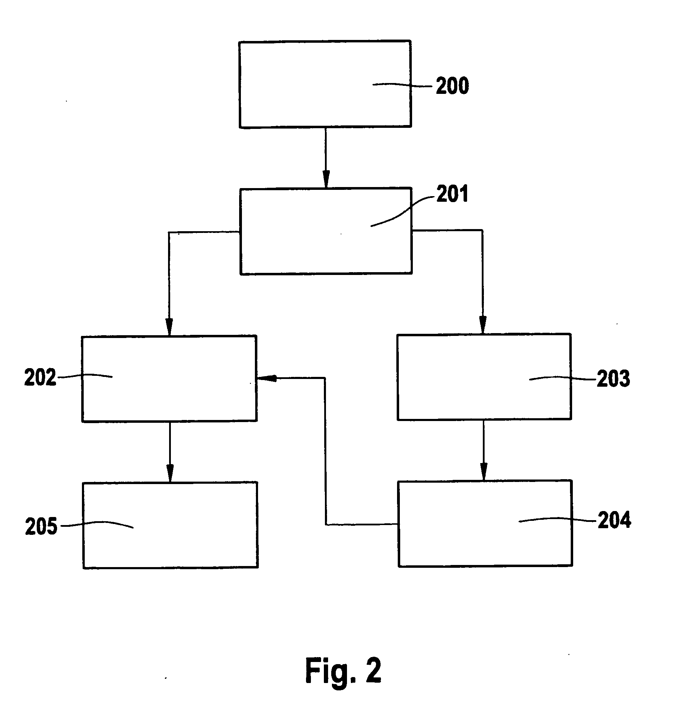

Figur 2 beschreibt nun den Ablauf des erfindungsgemäßen Verfahrens. In Verfahrensschritt 200 wird das Signal aufgenommen. In Verfahrensschritt 201 geschieht, wenn der gleiche Sensor zur Erfassung des Beschleunigungssignals und des Körperschallsignals verwendet wird, die Filterung. Das Beschleunigungssignal geht dann ein in den Algorithmus 202, der gegebenenfalls zur Ansteuerung 205 führt. Das hochfrequente Körperschallsignal wird in Verfahrensschritt 203 in der unten erläuterten Weise verarbeitet und führt dann in Verfahrensschritt 204 zu einer Veränderung der ersten Kennlinie. Damit ist ein freier Eingriff auf den Algorithmus leicht applizierbar und es ist klar, dass diese Funktion der Körperschallsensorik modular ist.

Bei der Filterung kann aus Plausibilitätsgründen vorgesehen sein, dass zwei Sensoren verwendet werden.

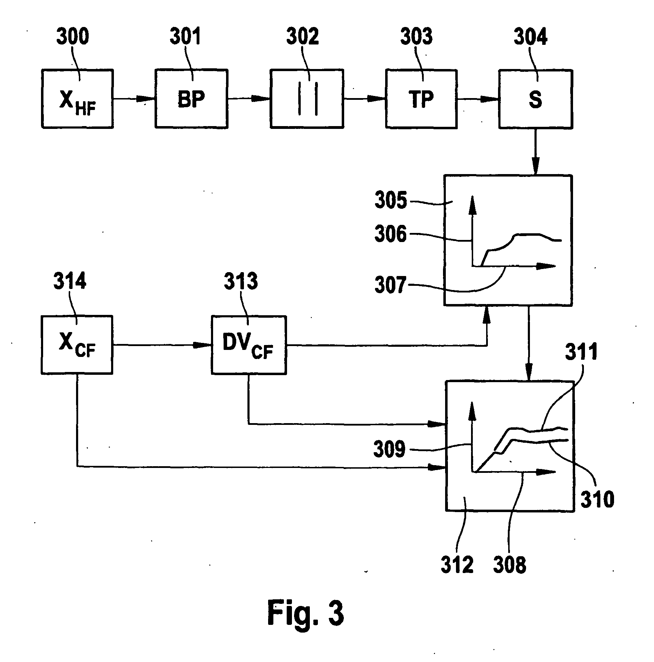

Figur 3 zeigt in einem weiteren Ablaufdiagramm das erfindungsgemäße Verfahren. In Verfahrensschritt 300 wird ein hochfrequentes Signal herausgefiltert, um in Verfahrensschritt 301 einem Bandpass unterzogen zu werden. In Verfahrensschritt 302 wird das Signal dann einer Betragbildung unterzogen. In Verfahrensschritt 303 erfolgt die Tiefpassfilterung dieses Signals. In vorteilhafter Weise kann das so entstandene Signal dann im Verfahrensschritt 304 integriert werden, so dass damit das dritte Signal beziehungsweise Merkmal entsteht. Im Ablaufschritt 305 wird dann das so entstandene dritte Signal in einem Vorverlagerungsbeschleunigungsdiagramm dargestellt. Anhand dieses Vergleichs, auch mit einer Kennlinie, wird bestimmt, wie die Kennlinie für den Hauptalgorithmus verändert wird. Die Vorverlagerung oder Geschwindigkeit 307 kommt vom Block 313 der die Geschwindigkeit für das niederfrequente Signal liefert. Die entsprechende Beschleunigung wird in Block 314 bereitgestellt. Diese beiden Größen gehen auch in den Block 312 ein, der die Beschleunigung 309 zur Vorverlagerung 308 darstellt. Deutlich sind die beiden Kurven 310 und 311 zu sehen, wobei die Kurve 311 in Abhängigkeit vom Signal aus dem Block 305 angehoben wurde.

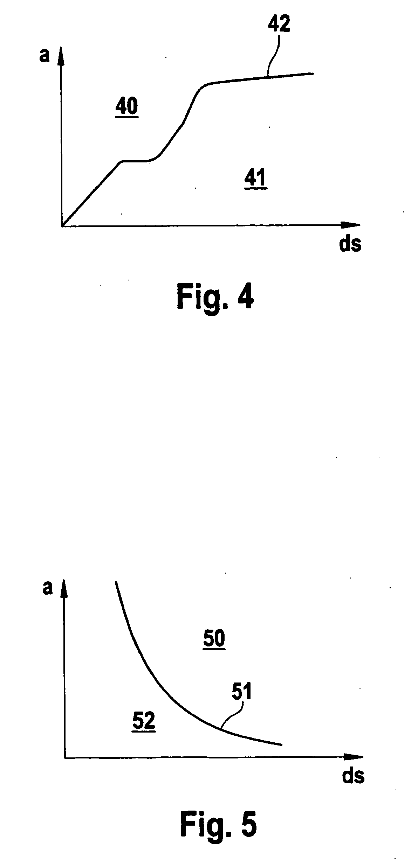

Figur 4 zeigt ein Beschleunigungsvorverlagerungsdiagramm. Die Kennlinie 42 trennt den Crash 40 vom Nichtcrash 41. Figur 5 erläutert ein weiteres Beschleunigungsvorverlagerungsdiagramm, wobei hier unterschieden wird zwischen einem Fehlauslöser 52, bei dem die Personenschutzmittel PS nicht ausgelöst werden dürfen, und dem Auslösefall 50. Diese beiden Gebiete werden durch die Kennlinie 51 getrennt.

## Patentansprüche

1. Vorrichtung zur Ansteuerung von Personenschutzmitteln (PS) mit einer Auswerteschaltung (µC), die in Abhängigkeit von einem ersten Signal einer Beschleunigungssensorik (BS1, BS2) und einem zweiten Signal einer Körperschallsensorik (K1, K2) die Personenschutzmittel (PS) ansteuert, wobei die Auswerteschaltung (µC) die Ansteuerung in Abhängigkeit von einer Lage eines Vektors aus wenigstens zwei ersten Merkmalen, die mit dem ersten Signal gebildet werden, in Bezug auf eine Kennlinie entscheidet, wobei die Kennlinie in Abhängigkeit vom zweiten Signal verändert wird, **dadurch gekennzeichnet, dass** die Kennlinie in Abhängigkeit von wengistens einem zweiten Merkmal des zweiten Signals verändert wird, wobei die Auswerteschaltung (µC) zur Bildung des wenigstens einen zweiten Merkmals eine Bandpassfilterung mit anschließender Einhüllendenbildung aufweist.

2. Vorrichtung nach Anspruch 1, **dadurch gekennzeichnet, dass** die Auswerteschaltung (µC) zur Bildung der wenigstens zwei ersten Merkmale einen Integrator aufweist, der zur einfachen und/oder zweifachen Integration des ersten Signals verwendet werden kann.

3. Vorrichtung nach Anspruch 1, **dadurch gekennzeichnet, dass** die Auswerteschaltung (µC) zur Einhüllendenbildung eine Betragsbildung und eine Tiefpassbildung aufweist.

4. Vorrichtung nach Anspruch 1, **dadurch gekennzeichnet, dass** die Beschleunigungssensorik (BS1, BS2) und die Körperschallsensorik (K1, K2) in einer gemeinsamen Sensorik verkörpert sind, wobei die Trennung zwischen dem ersten und dem zweiten Signal durch Filter realisiert sind.

5. Vorrichtung nach Anspruch 1, **dadurch gekennzeichnet, dass** die Beschleunigungssensorik (BS1, BS2) und die Körperschallsensorik (K1, K2) in einer getrennten Sensorik verköprert sind, wobei die Beschleunigungssensorik (BS1, BS2) und die Körperschallsensorik (K1, K2) in einer baulichen Einheit vorgesehen sind.

6. Vorrichtung nach einem der Ansprüche 1 bis 5, **dadurch gekennzeichnet, dass** die Auswerteschaltung (µC) zusätzlich anhand des Vektors auch durch einen Vergleich mit einer zweiten Kennlinie bestimmt, ob ein Auslösefall vorliegt.

7. Vorrichtung nach einem der vorhergehenden Ansprüche, **dadurch gekennzeichnet, dass** die Auswerteschaltung (µC) anhand des ersten Signals eine Bewegung eines Fahrzeuginsassen bestimmt, wobei die Auswerteschaltung (µC) in Abhängigkeit von der Bewegung eine Auslösezeit für die Personenschutzmittel bestimmt.

8. Verfahren zur Ansteuerung von Personenschutzmitteln, wobei in Abhängigkeit von einem ersten Signal einer Beschleunigungssensorik und einem zweiten Signal einer Körperschallsensorik die Personenschutzmittel ansteuert, wobei die Ansteuerung in Abhängigkeit von einer Lage eines Vektors aus wengistens zwei Merkmalen, die aus dem ersten Signal gebildet werden, in Bezug auf eine Kennlinie entschieden wird, wobei die Kennlinie in Abhängigkeit vom zweiten Signal verändert wird, **dadurch gekennzeichnet, dass** die Kennlinie in Abhängigkeit von wenigstens einem zweiten Merkmal verändert wird, wobei das wenigstens eine zweite Merkmal mittels Bandpassfilterung und anschließender Einhüllendenbildung aus dem zweiten Signal erzeugt wird.

9. Verfahren nach Anspruch 8, **daurch gekennzeichnet, dass** die wenigstens zwei ersten Merkmale mittels einfacher und/oder zweifacher Integration bestimmt werden.

10. Verfahren nach Anspruch 8, **dadurch gekennzeichnet, dass** die Einhüllendenbildung mittels Betragsbildung unf Tiefpassfilterung erreicht wird.

11. Verfahren nach Anspruch 8, **dadurch gekennzeichnet, dass** bei einer gemeinsamen Sensorik für die Beschleunigungssensorik und für die Körperschallsensorik die Trennung des ersten und zweiten Signals durch Filtern erreicht wird.

12. Verfahren nach einem der Ansprüche 8 bis 11, **dadurch gekennzeichnet, dass** zusätzlich anhand des Vektors durch Vergleich mit einer zweiten Kennlinie bestimmt wird, ob ein Auslösefall vorliegt.

13. Verfahren nach einem der Ansprüche 8 bis 11, **dadurch gekennzeichnet, dass** anhand des ersten Signals eine Bewegung eines Fahrzeuginsassen bestimmt wird, wobei in Abhängigkeit von der Bewegung eine Auslösezeit für die Personenschutzmittel bestimmt wird.

## Claims

1. Device for the actuation of personal protection means (PS) having an evaluation circuit (µC) which actuates the personal protection means (PS) as a function of a first signal of an acceleration sensor system (BS1, BS2) and a second signal of a solid-borne sound sensor system (K1, K2), wherein the evaluation circuit (µC) decides about the actuation as a function of a position of a vector, composed of at least two first features which are formed with the first signal, with respect to a characteristic curve, wherein the characteristic curve is changed as a function of the second signal, **characterized in that** the characteristic curve is changed as a function of at least one second feature of the second signal, wherein the evaluation circuit (µC) has, for the formation of the at least one second feature, a bandpass filtering process with subsequent envelope formation process.

2. Device according to Claim 1, **characterized in that** the evaluation circuit (µC) has, for the formation of the at least two first features, an integrator which can be used for single and/or double integration of the first signal.

3. Device according to Claim 1, **characterized in that** the evaluation circuit (µC) has an absolute value formation process and a low pass filtering process for the envelope formation process.

4. Device according to Claim 1, **characterized in that** the acceleration sensor system (BS1, BS2) and the solid-borne sound sensor system (K1, K2) are embodied in a common sensor system, wherein the division between the first and second signals is implemented by means of filters.

5. Device according to Claim 1, **characterized in that** the acceleration sensor system (BS1, BS2) and the solid-borne sound sensor system (K1, K2) are embodied in a separate sensor system, wherein the acceleration sensor system (BS1, BS2) and the solid-borne sound sensor system (K1, K2) are provided in one structural unit.

6. Device according to one of Claims 1 to 5, **characterized in that** the evaluation circuit (µC) also additionally determines, on the basis of the vector a comparison with a second characteristic curve, whether a case of triggering is present.

7. Device according to one of the preceding claims, **characterized in that** the evaluation circuit (µC) determines, on the basis of the first signal, a movement of a vehicle occupant, wherein the evaluation circuit (µC) determines a triggering time for the personal protection means as a function of the movement.

8. Method for the actuation of personal protection means, wherein the personal protection means is actuated as a function of a first signal of an acceleration sensor system and a second signal of a solid-borne sound sensor system, wherein the actuation is decided about as a function of a position of a vector, composed of at least two features which are formed from the first signal, with respect to a characteristic curve, wherein the characteristic curve is changed as a function of the second signal, **characterized in that** the characteristic curve is changed as a function of at least one second feature, wherein the at least one second feature is generated from the second signal by means of a bandpass filtering process and subsequent envelope formation process.

9. Method according to Claim 8, **characterized in that** the at least two first features are determined by means of single and/or double integration.

10. Method according to Claim 8, **characterized in that** the envelope formation process is brought about by means of an absolute value formation process and low pass filtering process.

11. Method according to Claim 8, **characterized in that** when there is a common sensor system for the acceleration sensor system and for the solid-borne sound sensor system, the separation between the first and second signals is brought about by means of filtering.

12. Method according to one of Claims 8 to 11, **characterized in that** on the basis of the vector and by comparison with a second characteristic curve it is additionally determined whether a case of triggering is present.

13. Method according to one of Claims 8 to 11, **characterized in that** a movement of a vehicle occupant is determined on the basis of the first signal, wherein a triggering time for the personal protection means is determined as a function of the movement.

## Revendications

1. Dispositif de commande de moyens (PS) de protection des personnes,
le dispositif présentant un circuit d'évaluation (µC) qui commande les moyens (PS) de protection des personnes en fonction d'un premier signal d'un ensemble (BS1, BS2) de détecteurs d'accélération et d'un deuxième signal d'un ensemble (K1, K2) de détecteurs de bruit matériel,
le circuit d'évaluation (µC) décidant de la commande en fonction de la position d'un vecteur constitué d'au moins deux premières caractéristiques formées par le premier signal en référence à une ligne caractéristique, la ligne caractéristique étant modifiée en fonction du deuxième signal,
**caractérisé en ce que**
la ligne caractéristique est modifiée en fonction d'au moins une deuxième caractéristique du deuxième signal, le circuit d'évaluation (µC) présentant un filtre passe-bande suivi de la formation d'une enveloppe pour former la ou les deuxièmes caractéristiques.

2. Dispositif selon la revendication 1, **caractérisé en ce que** le circuit d'évaluation (µC) présente pour la formation de la ou des deuxièmes caractéristiques un intégrateur qui peut être utilisé pour intégrer une et/ou deux fois le premier signal.

3. Dispositif selon la revendication 1, **caractérisé en ce que** pour la formation d'une enveloppe, le circuit d'évaluation (µC) présente la formation d'une valeur et un filtrage passe-bas.

4. Dispositif selon la revendication 1, **caractérisé en ce que** l'ensemble (BS1, BS2) de détecteurs d'accélération et l'ensemble (K1, K2) de détecteurs de bruit matériel sont intégrés dans un ensemble commun de détecteurs, la séparation entre le premier et le deuxième signal étant réalisée par des filtres.

5. Dispositif selon la revendication 1, **caractérisé en ce que** l'ensemble (BS1, BS2) de détecteurs d'accélération et l'ensemble (K1, K2) de détecteurs de bruit matériel sont intégrés dans des ensembles distincts de détecteurs, l'ensemble (BS1, BS2) de détecteurs d'accélération et l'ensemble (K1, K2) de détecteurs de bruit matériel étant prévus dans un module unitaire.

6. Dispositif selon l'une des revendications 1 à 5, **caractérisé en ce que** le circuit d'évaluation (µC) détermine de plus, à l'aide du vecteur une comparaison avec une deuxième ligne caractéristique la nécessité éventuelle d'un déclenchement.

7. Dispositif selon l'une des revendications précédentes, **caractérisé en ce qu'**à l'aide du premier signal, le circuit d'évaluation (µC) détermine un déplacement d'un passager du véhicule, le circuit d'évaluation (µC) déterminant le temps de déclenchement des moyens de protection des personnes en fonction du déplacement.

8. Procédé de commande de moyens de protection des personnes, qui commande les moyens de protection des personnes en fonction d'un premier signal d'un ensemble de détecteurs d'accélération et d'un deuxième signal d'un ensemble de détecteurs de bruit matériel, la commande s'effectuant en fonction de la position d'un vecteur constitué d'au moins deux premières caractéristiques formées par le premier signal en référence à une ligne caractéristique, la ligne caractéristique étant modifiée en fonction du deuxième signal,
**caractérisé en ce que**
la ligne caractéristique est modifiée en fonction d'au moins une deuxième caractéristique du deuxième signal, le circuit d'évaluation présentant un filtre passe-bande suivi de la formation d'une enveloppe pour former la ou les deuxièmes caractéristiques.

9. Procédé selon la revendication 8, **caractérisé en ce que** les deux ou plusieurs premières caractéristiques sont définies par intégration simple ou intégration double.

10. Procédé selon la revendication 8, **caractérisé en ce que** la formation de l'enveloppe est obtenue par formation d'une valeur et filtrage passe-bas.

11. Procédé selon la revendication 8, **caractérisé en ce que** lorsqu'il existe un ensemble commun de détecteurs pour l'ensemble de détecteurs d'accélération et l'ensemble de détecteurs de bruit matériel, la séparation entre le premier et le deuxième signal s'effectue par des filtres.

12. Procédé selon l'une des revendications 8 à 11, **caractérisé en ce qu'**en supplément, il détermine la nécessité éventuelle d'un déclenchement à l'aide du vecteur et par comparaison avec une deuxième ligne caractéristique.

13. Procédé selon l'une des revendications 8 à 11, **caractérisé en ce qu'**à l'aide du premier signal, le circuit d'évaluation détermine un déplacement d'un passager du véhicule, le circuit d'évaluation déterminant le temps de déclenchement des moyens de protection des personnes en fonction du déplacement.
